# EUROPEAN PATENT APPLICATION

(11) **EP 1 569 124 A1**
(43) Date of publication of application: **31.08.2005**
(21) Application number: 04004388.7
(22) Date of filing: 26.02.2004
(51) Int. Cl.: G06F 12/04

(54) **Memory interface and data processing**

(71) Applicant: MATSUSHITA ELECTRIC INDUSTRIAL CO., LTD., Osaka 571-8501 (JP)
(72) Inventor: Janssen, Frank, 63225 Langen (DE); Hubrich, Ralf, 64331 Weiterstadt-Gräfenhausen (DE)
(74) Representative: Grünecker, Kinkeldey, Stockmair & Schwanhäusser Anwaltssozietät

(57) **Abstract**

A memory interface connecting a single data bus to a parallel configuration of plural uniform memory units is provided. The memory interface is capable of reading/storing a subsequence of data items from a sequence of consecutive data items within a single memory access cycle, wherein the width of a subsequence corresponds to the width of the data bus. Each data item of a subsequence is read from/stored in a different one of the plural uniform memory units, and the memory interface controls individual access to each of the plural uniform memory units in accordance with an access request for a particular subsequence of data items.

## Description

The present invention relates to high bandwidth memory configurations allowing parallel access to plural memory units in order to support fast signal processing applications. Specifically, the present invention relates to a memory interface connecting a single data bus to a parallel configuration of plural uniform memory units for reading/storing a subsequence of data items within a sequence of consecutive data items.

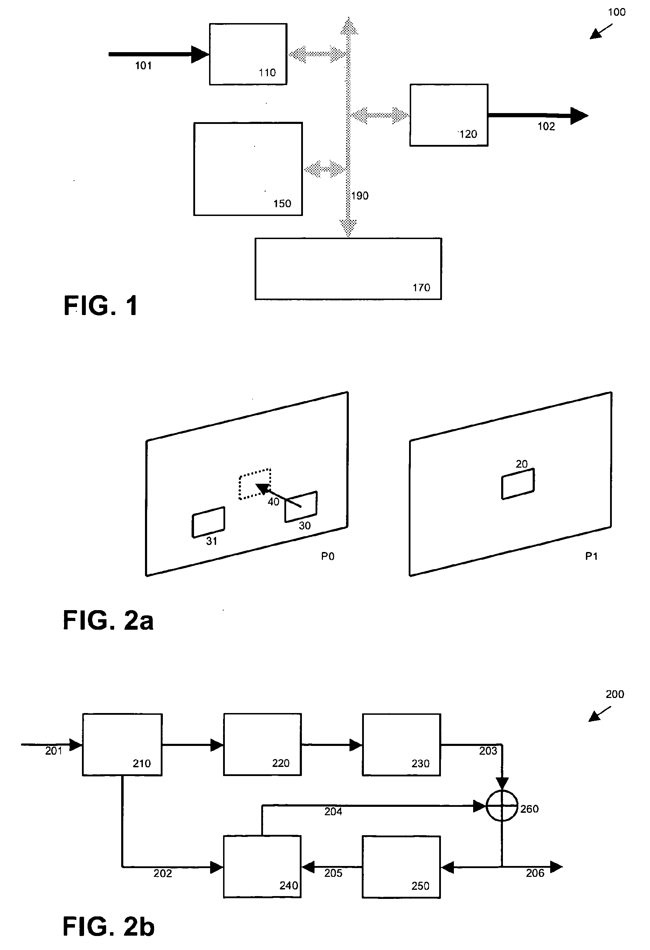

In the field of signal processing, the utilization of digital data becomes more and more common, and thus, digital signal processing is now widely in use. A basic configuration of a digital signal processor is schematically illustrated in Fig. 1. A digital signal processing system 100 receives input data 101 at an input stage 110. The input data is transferred via an internal data bus 190 of the digital signal processing system to a microprocessor 150 or to a memory unit 170. The microprocessor performes signal processing on the input data and may further store data in memory unit 170 for later reference. Processed data is transferred to the output stage 120 and output for further processing or presentation, etc.

The employment of digital signal processing in communication devices and consumer entertainment devices has lead to the development of increasingly complex signal processing schemes, that require access to a substantial amount of stored data at a high bandwidth. In addition, digital signal processing relies more and more on parallel processing of data in order to increase the data throughput.

In particular, image processing applications benefit from digital signal processing systems that provide a high memory access bandwidth. Typical applications are image encoding/decoding, video coding in accordance, for instance, with MPEG or H.26X compression standards, and image processing such as picture improvement techniques of modern television sets. Such picture improvement techniques include frame-rate conversion, up-conversion and motion compensation techniques employed for de-interlacing and frame-rate conversion.

A common feature of most implementations of the above mentioned applications is the requirement of accessing a specific number of adjacent data items out of a larger sequence of adjacent data items. When considering for instance the above mentioned cases of image/video processing, these adjacent data items correspond to adjacent pixels in a digital image.

An access scheme for adjacent data items out of a sequence of data items is illustrated in Fig. 4. Data items ..., D2, D3, D4 ... are concatenated as a sequence of data 400. At specific time points, a processing means 410 accesses an arbitrarily selected subsequence (D6 to D10 or D9 to D13) of data sequence 400 in order to perform processing thereon, or to employ such data as reference data in a processing operation, respectively.

A typical stage of a processing means for digital data processing are finite-extend impulse response filters (FIR filters) that are supplied with a specific number of data items in parallel. However, parallel access to adjacent data items is not only employed for filter processing but also in various other signal processing applications.

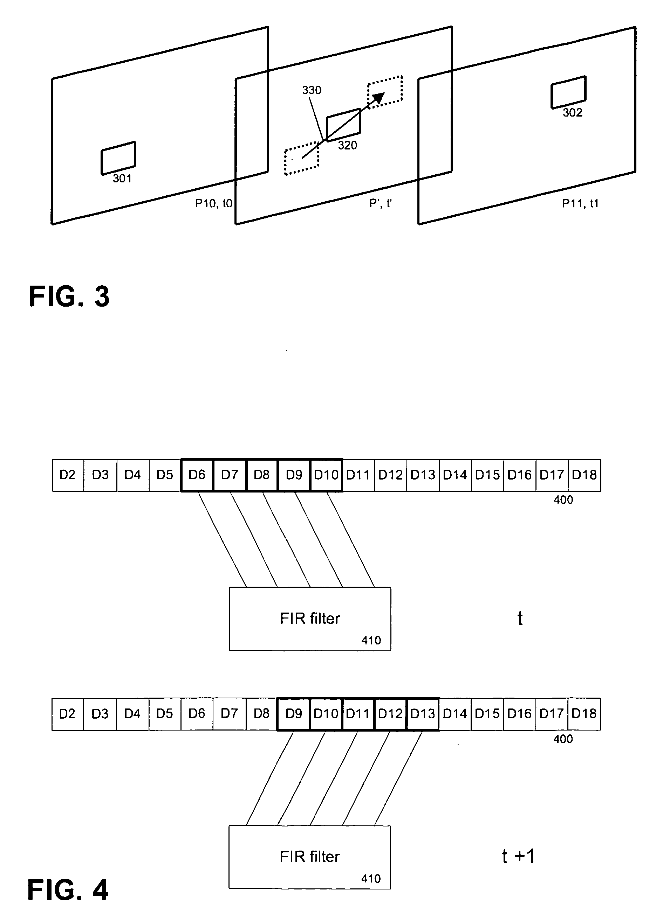

In the following, signal processing applications which rely on random access to subsequences of adjacent data are briefly described while referring to Figs. 2a, 2b and 3.

Fig. 2a outlines a motion estimation technique which is usually employed in video encoding in order to reduce the temporal redundancy of the transmitted video data. The specific motion estimation technique depicted in Fig. 2a is the block matching technique. A current video image P1 is subdivided into a plurality of macroblocks of a predetermined size. Each block 20 is compared to candidate blocks 30, 31 selected from previous video image P0 in order to find a best match. In a particular block matching technique, any block of previous image P0 equal in size to macroblock 20 and being within a predetermined search area qualifies as candidate block. Different candidate blocks are selected at pixel intervals or sub-pixel intervals.

The candidate block 30 which matches best with block 20 is chosen, and a motion vector 40, indicating a displacement between the best matched block 30 and the image block 20 of video image P1 is determined. Based on previous image P0 and the motion vectors, a decoder forms predicted video images, such that only information indicating the difference between the predicted image and the actual image has to be encoded and supplied to the decoder.

There are many other approaches to motion estimation, such as performing a conversion of image data into the frequency domain. However, each of these methods includes accessing portions of adjacent data of a previous video image. Specifically, the block matching technique relies on access to video data in such a manner that portions of adjacent data forming a candidate block can be randomly accessed within the data of a video image. The same applies to video encoding utilizing the motion estimation results of any motion estimation technique with respect to accessing the data of a best matched block.

Another application for motion estimation techniques are frame-rate conversion techniques. The basic principle of frame-rate conversion is illustrated in Fig. 3. From image data of input images P10 and P11, to be presented at a time t0 and t1, respectively, an intermediate image P' is calculated to be presented at a time t' different from t0 and t1. Simple interpolation techniques just repeat the image data of previous image P10. However, such a processing leads to artefacts such as motion judder.

A more sophisticated approach is to calculate the data of each pixel of intermediate image P' by an interpolation over the values of corresponding adjacent pixels of input images P10 and P11. Usually, digital filters are employed for the interpolation processing. This approach requires random access to adjacent image data of images P10 and P11. The interpolated images still are subject to artefacts such as motion smear. A more satisfying result can be achieved by employing motion estimation and compensation.

Referring to Fig. 3, an object moving from a position 301 in image P10 to a position 302 in image P11 is attributed a motion vector 330 by an appropriate motion estimation technique. Motion vector 330 indicates image area 320 of image P' as image area where the moving object is located at the corresponding time t'. In order to calculate the image data of image area 320, the image data of area 301 of image P10 and image area 302 of image P11 is subjected to the interpolation processing.

Again, the motion estimation processing and the motion compensated generation of intermediate images rely on random access to adjacent image data.

Another application utilizing above described parallel data access schemes relates to a video decoding unit capable of performing decoding of encoded video streams in accordance with the MPEG standard. Such a video decoding unit is outlined in the following.

Fig. 2b illustrates a schematic block diagram of a basic MPEG decoder. An encoded video stream 201 is subjected to inverse variable length coding in a respective decoding unit 210. At this step, the decoded data is further separated into image data and motion vector data 202 to be utilized for image prediction. The image data is further subjected to inverse discrete cosine transformation in transformation unit 220 and to inverse quantization in unit 230. As a result, image data of reference frames (I-frames) or prediction error data for predicted frames (P-/B-frames) 203 is obtained. In an image composition unit 260, predicted images are combined with the prediction error data in order to obtain an output image 206. Output images 206 are also stored in a frame memory 250 in order to be employed as reference images for the prediction of the following frames. Motion compensation unit 240 generates a predicted image 204 from a reference image 205 and from motion vector data 202. The motion vector data specifies for each macroblock of predicted image 204 a corresponding image portion of reference image 205.

Specially the generation of the predicted images requires fast and random access to portions of adjacent image data of the reference images stored in frame memory 250. If the access to a portion of image data can not be completed within a predetermined time, the decoding process is temporarily interrupted.

In order to avoid such problems and ensure a fast reliably access to data portions of image data, an improved memory access scheme is described in GB-A-2 368 695. In a video decompression system similar to the one illustrated in Fig. 2b, a frame memory stores data of pixels of each horizontal image line in successive rows of the memory. Due to the data amount, at least two memory rows are required for storing the image data of a horizontal line. The data of the horizontal image lines is randomly accessed in portions of 16 data byte, corresponding to the width of a macroblock.

In order to achieve a high memory access bandwidth, the data portions are read out from the memory rows using the page mode. According to the page mode, a row of the memory device is selected at the beginning of a memory access, and after that, only the column address is increased until the entire data portion has been read. Since the memory has a width of 16 bit, always 2 data byte are read at a time.

An access delay may occur, when the data portion includes data stored in two different memory rows. This data portion cannot be read continuously in the page mode since the row address has to be increased. Due to this so-called page break problem, the memory access of a data portion of a horizontal line is delayed and the decoding process is temporarily interrupted.

In order to avoid this problem, duplicated data is stored at the end portion of the memory row where the horizontal line is broken. The duplicated data is copied from the starting position of the next memory row. The number of duplicated data byte corresponds to the number of the data byte being accessed at a time. This ensures, that a randomly selected data portion of a horizontal line can always be continuously accessed in the page mode.

The above described memory access scheme has the drawback, that the memory is not efficiently utilized since duplicated data must be stored. Further, when storing reference image data, the duplication procedure requires additional processing resources.

In the above described memory access scheme, a memory having a width of 16 bit is employed, such that an access to a memory address always relates to 2 data byte. It is therefore not possible to randomly access data portions at intervals of a single data byte. In consequence, when a data portion starting with the second byte of an address is accessed, the number of access cycles increases and a first and a last data byte of the read bytes have to be discarded.

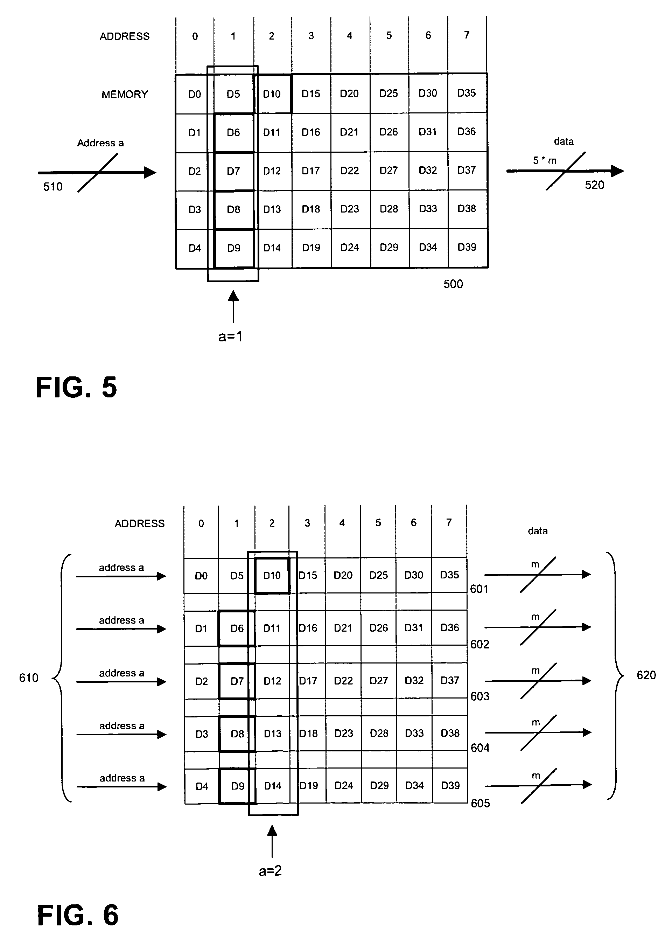

In order to increase the memory access bandwidth in digital signal processing applications, there is an approach to even further increase the memory width of a memory configuration, such that a larger number of data items can be accessed with a single memory address. Further, the width of a data bus connected to the memory configuration is increased to match the memory width. Such memory configurations are illustrated in Fig. 5 and Fig 6.

The memory configuration in Fig. 5 depicts memory unit 500 having a memory width that allows 5 items of concatenated data (D0 to D4, D5 to D9, etc.) to be stored at each single memory address "a". The address is specified by an address bus 510 and the accessed data items are transmitted on data bus 520. For instance, at address a=1, data items D5 to D9 are simultaneously accessed and transmitted on data bus 520.

Memory configurations having a very large width, such as 32 or 64 bit, are usually not formed by a single memory unit but by a parallel configuration of plural uniform memory units. Such a configuration is depicted in Fig. 6. The uniform memory units 601, 602, 603, 604, 605 are addressed by a common address bus 610, supplying the same address "a" to all of the memory units. In accordance with the selected address, a data item from each memory unit 601 to 605 is accessed in each access cycle and transmitted on data bus 620. The data bus has a width to simultaneously transmit all data items accessed in one cycle. For instance, at address a=2, data items D10 to D14 are simultaneously accessed and transmitted on data bus 620.

Both of these memory configurations have the drawback, that the intervals at which data portions can be randomly accessed is further increased. Therefore, data portions can not be randomly accessed in intervals of a single data item.

Specifically, such memory configurations do not satisfy the requirements of signal processing applications which rely on random access to subsequences of data items out of a sequence of adjacent data items. For instance, when in the memory configurations of Fig. 5 and 6 an access of data items D6 to D10 is requested, two separate accesses have to be carried out to all data items stored at address a=1 and address a=2. The not required data items D5 and D11 to D14 are discarded. Thus, although the requested data items D6 to D10 matches the width of the data bus, two access operations have to be carried out.

In general, the bandwidth of the memory access is not efficiently used, when data portions can not be randomly accessed in intervals of a single data item.

The present invention aims at providing an improved approach for a memory access scheme that efficiently utilizes the bandwidth of a memory configuration.

This is achieved by the subject matter of the independent claims.

Preferred embodiments are the subject matter of dependent claims.

According to a first aspect of the present invention, a memory interface connecting a single data bus to a parallel configuration of plural uniform memory units is provided. The memory interface is capable of reading/storing a subsequence of data items from a sequence of consecutive data items within a single memory access cycle, wherein the width of a subsequence corresponds to the width of the data bus. Each data item of a subsequence is read from/stored in a different one of the plural uniform memory units, and the memory interface controls individual access to each of the plural uniform memory units in accordance with an access request for a particular subsequence of data items.

According to another aspect of the present invention, a memory access method is provided for accessing a parallel configuration of plural uniform memory units via a single data bus in order to read/store a subsequence of data items from a sequence of consecutive data items. The width of the subsequence corresponds to the width of the data bus. The access method comprises the step of reading/storing a particular subsequence of data items in a single memory access cycle by reading/storing each data item of the subsequence from a different one of the plural uniform memory units. The reading/storing step comprises the step of controlling individual access to each of the plural uniform memory units in accordance with an access request for a subsequence of data items.

In accordance with an access request, each of the plural uniform memory units is individually accessed, such that only data items of the requested subsequence are read/stored.

It is a particular advantage of the present invention, that any subsequence within the sequence of stored data items can be randomly accessed in a single memory access cycle. In consequence, the memory access bandwidth of the memory configuration is utilized with maximum efficiency. Further, storing of redundant data is obsolete since data items stored on different memory units at different addresses can be individually accessed within the same access cycle.

The memory access scheme of the present invention is particularly suitable for digital signal processing applications requiring parallel access to plural adjacent data items. Due to the present invention, data items are accessed in parallel in such a manner that random access is possible at an interval of a single data item. Therefore, digital signal processing applications benefit from efficient parallel random access to subsequences of adjacent data items.

Preferably, a controller receives an access request for a subsequence of data items and calculates individual addresses for the plural uniform memory units in accordance with the access request. In accordance therewith, the memory interface efficiently carries out individual control for the plural memory units in accordance with each access request.

According to a further embodiment of the present invention, an access request for a subsequence of data items specifies a storage position of at least one data item of the subsequence of data items. By including such information as the storage position of one of the data items into the access request, the individual addresses for the adjacent data items can be effortlessly calculated. In addition, the amount of data transferred in each access request is low.

Preferably, the storage position of a data item is specified by an address and the designation of a specific memory unit out of the plural uniform memory units. This information unambiguously specifies the storage position.

In accordance with another embodiment of the present invention, an access request for a subsequence of data items specifies a position of at least one data item of the subsequence of data items within the sequence of data items. By specifying the position within the sequence, the actual storage position of a data item can be efficiently determined. Further, the amount of data to be transmitted in an access request is minimized.

Preferably, the data items of the sequence of data items are stored in a cyclic manner in the parallel configuration of the plural uniform memory units. Each of consecutive data items is stored in consecutive memory units at the same address. The address is increased after all storage positions which are accessible under a specific address are all occupied in the plural uniform memory units. According to this storage scheme, adjacent data items of a subsequence of data items are all stored on different memory units.

According to a further embodiment of the present invention, the individual addresses only include either a single address or two adjacent addresses. Thus, the computation effort for calculating the individual access addresses is minimized.

Preferably, an address calculation stage of the controller calculates two adjacent addresses in accordance with the access request.

In accordance with a preferred embodiment of the present invention, the controller is further provided with a selection means which selects one of the two calculated addresses as individual address for each of the plural uniform memory units. Accordingly, a very efficient controller is provided capable of supplying an individual address to each of plural memory units.

According to another preferred embodiment of the present invention, the data items read from the plural uniform memory units are sorted such that the data items of a subsequence of data items read from the plural uniform memory units is in accordance with the succession of data items in the sequence of data items. Due to this feature, the processing load of a signal processor is decreased, since each subsequence of data items is always provided in the correct order.

According to another embodiment, the data items of a subsequence of data items to be stored in the plural uniform memory units are sorted in order to bring the succession of the data items to be stored into accordance with a predetermined storage succession. Accordingly, the data items can be supplied to the memory units according to their original succession and the storage succession of the data items in the memory remains completely transparent to the processing means.

Preferably, the exchange scheme for sorting the data items is determined in accordance with a storage position of at least one data item of the subsequence of data items.

The memory interface of the present invention is preferably configured such that a write access is carried out as a collective access to an identical address of the plural uniform memory units. In many applications, data to be stored in the memory is input in a continuous manner, such that the capability of random access at intervals of a single data item is seldom required when writing data. Thus, the processing load of a controller of the memory interface can be lowered.

Preferably, each of the data items and each of the plural uniform memory units has a width of 10 bit.

Further, it is preferred that a subsequence includes five data items.

In accordance with another preferred embodiment, the data bus has a width of 50 bit.

In another preferred embodiment, the present invention provides a data processing system for performing data processing which requires access to a predetermined number of adjacent data items out of a sequence of consecutive data items. This data processing system comprises a processing means for performing data processing on the adjacent data items, a single data bus connected to the processing means, and a memory interface in accordance with the previously mentioned embodiments of the present invention. The memory interface is connected to the data bus and to a plurality of uniform memory units. Accordingly, the data processing system is capable of performing parallel access to plural memory units at a high bandwidth and at random data intervals. In particular, access requests for adjacent data items can be carried out at maximum efficiency.

Preferably, the processing means is configured to process the predetermined number of adjacent data items in parallel. The number of data items of a subsequence of data items accessed via the memory interface in a single memory access cycle corresponds to the number of data items being processed in parallel. Thus, in each access cycle of the memory, the data processing means is provided with a complete set of data to be processed in parallel. This feature enables a particular efficient processing of data, since the data supplied from the memory interface are directly utilized for further processing.

In a preferred embodiment of the present invention, the processing means includes a digital filter which is supplied with the predetermined number of adjacent data items. Accordingly, the digital filter may process subsequences of adjacent data items very fast, namely one sequence in each memory access cycle.

In a further embodiment of the present invention, the processing means include a number of pipelined processing stages. Since the number of access cycles required for obtaining a predetermined number of data items from the memory interface is always constant, unexpected delays in the processing stages can be reliably avoided such that the pipelined processing becomes very efficient and reliable.

In another preferred embodiment, the processing means include an image processor. Since many image processing applications require random access to subsequences of plural adjacent data items, a memory interface of the present invention is particularly suitable for being used with an image processor.

Preferably, the image processor is operable to perform at least one of the following picture improvement algorithms of frame-rate conversion, frame-rate up-conversion, and motion compensated up-conversion.

The above and other objects and features of the present invention will become more apparent from the following description and preferred embodiments given in conjunction with the accompanying drawings, in which:
- Fig. 1: is a schematic representation of a basic configuration of a digital signal processing system;
- Fig. 2a: illustrates the principles of motion estimation using block matching;
- Fig. 2b: is a schematic block diagram of a video decoder;
- Fig. 3: illustrates the technique of motion-compensated frame-rate conversion;
- Fig. 4: illustrates a data access scheme, wherein a processing means accesses a predetermined number of adjacent data items in parallel at random intervals;
- Fig. 5: depicts a single memory unit storing a predetermined number of data items in parallel;
- Fig. 6: depicts a parallel configuration of plural memory units being accessed in parallel via a single address bus and a single data bus;

- Fig. 7: illustrates a memory configuration in accordance with the present invention, wherein plural uniform memory units are individually accessed;
- Fig. 8: is a block diagram of a memory interface between a signal processor and plural uniform memory units in accordance with the present invention;
- Fig. 9: represents a block diagram of a controller of a memory interface in accordance with the present invention; and
- Fig. 10: is a flow-chart illustrating a memory access method being carried out within the memory interface of the present invention.

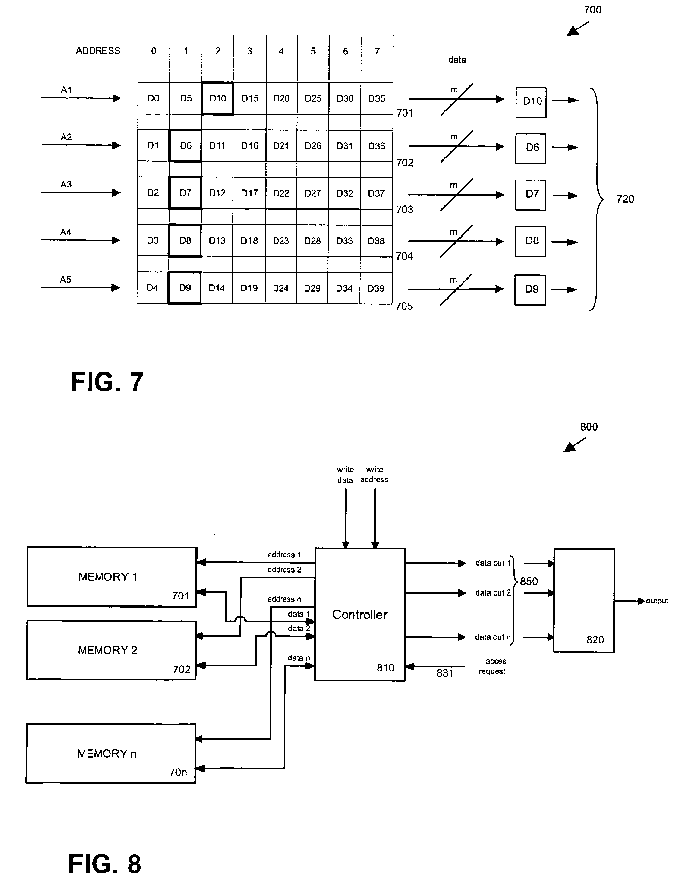

Referring now to Fig. 7, a memory configuration 700 in accordance with the present invention is formed of plural uniform memory units 701, 702, 703, 704 and 705 which are arranged in parallel. Each memory unit of the parallel configuration 700 of plural uniform memory units is supplied with its own separate address port A1 to A5 and its own separate data port, such that each plural uniform memory unit 701 to 705 is independently accessible.

In this example, the parallel configuration includes five uniform memory units. However, as will become apparent in the following description, the number of memory units arranged in parallel is not limited but can be selected in accordance with the respective signal processing application.

The memory units store data items D0, D1, ... of a sequence of consecutive data items in such a way, that adjacent data items are stored in different memory units. The width of each memory unit 701 to 705 is selected to correspond to the predetermined width of each of the data items D0, D1, ..., etc. In each memory access cycle, a randomly selected data item can be read from or stored in each memory unit 701 to 705. The individually accessed data items are transmitted to a data bus 720 having a width corresponding to the total width of the parallel configuration 700 of the memory units.

The parallel configuration of memory units 701 to 705 is accessed in such a manner that a subsequence of adjacent data items, such as D6 to D10, is accessed from the sequence of consecutive data items D0, D1, ... in each memory access cycle. The number of data items in the subsequence corresponds to the number of the memory units. Each data item of the subsequence is read/stored at a different one of plural uniform memory units 701 to 705.

Fig. 7 further illustrates an exemplary storage scheme for the sequence of consecutive data items. In accordance therewith, the sequence of consecutive data items is stored in a cyclic manner. At each address, subsequent data items D0 to D4, D5 to D9, D10 to D14, etc. are stored in memory units 701 to 705 consecutively. After occupying a storage position in each memory unit 701 to 705 accessible under a specific address, the address is increased and further data items are stored consecutively in the parallel configuration of memory units.

As a result, the sequence of data items D0, D1, etc. is stored in a cyclic manner in memory units 701 to 705, and adjacent data items are stored in different, adjacent memory units. In particular, a randomly selected subsequence out of the sequence of consecutive data items can be read/stored in a single memory access cycle by individually accessing each of the plural memory units. For instance, the subsequence D6 to D10 of data items is accessed at individual addresses of memory units 701 to 705, by utilizing the address 1 for address ports A2, A3, A4 and A5 and address 2 for address port A1, respectively.

The cyclic storage scheme of the data items of the sequence of data items D0, D1, ..., etc. ensures that adjacent data items are stored on different memory units, and that each randomly selected subsequence of the sequence of consecutive data items includes a data item from each of the plural memory units.

A system configuration, wherein such a parallel configuration of plural individually accessible memory units is utilized, is depicted in Fig. 8. The system configuration of a signal processing system 800 employs a processing means 820 for performing signal processing based on subsequences of data items out of a sequence of consecutive data items. The sequence of data items is stored in memory units 701 to 70n. Memory units 701 to 70n are configured to store the data items according to the cyclic storage scheme described with reference to Fig. 7. A controller 810 forms a memory interface for connecting a data bus 850 and the plurality of memory units 701 to 70n. Via data bus 850 data items are transmitted between controller 810 and processing means 820.

When receiving an access request 831 for a subsequence of data items, controller 810 individually accesses each of the plural uniform memory units 701 to 70n and transmits each data item of the accessed subsequence via data bus 850.

In the exemplary configuration illustrated in Fig. 8, data to be written and a write access request (such as a write address) are issued by a different source than a read access request. However, it is also possible, that a single processing device issues both read and write access request and receives/transmits the respective data.

In accordance with a read access request, controller 810 determines individual access addresses for each memory unit 701 to 70n of the plurality of memory units. Due to the cyclic storage scheme of the data items of the sequence of data items, which is illustrated in Fig. 7., each subsequence of data item can be accessed by utilizing a single address or two adjacent addresses. For example, subsequence D5 to D9 can be accessed under address 1. On the other hand the highlighted subsequence D6 to D10 is accessible under two different adjacent addresses, namely address 1 for memory units 702 to 705 and address 2 for memory unit 701.

These addresses required for individually accessing each of the plural memory units can be easily determined in accordance with the cyclic storage scheme, when at least the storage position of one of the data items of the subsequence of the data items is known. The storage position of any data item is unambiguously identified by a memory address and the specification of the memory unit storing the data item. From the information on the storage position of one data item of the subsequence, the addresses of all other data items of a subsequence can be calculated and the respective memory units can be specified.

In order to simplify the explanation, the memory units of the parallel configuration of plural uniform memory units 700 are considered to be indexed in a consecutive manner by incremental index numbers "1" to "n".

Assuming the storage position, i.e. the memory address and the memory unit, of a specific data item to be known, consecutive data items are stored in memory units of increasing index number at the same address until reaching the last memory unit 70n ― having the highest index number - in the parallel configuration of memory units 701 to 70n. Then, the address is increased by one and a successive data item is stored at the first memory unit 701 of the parallel configuration of memory units, having the lowest index number. On the other hand, antecedent data items are stored at the same address in memory units of decreasing index number, until the first memory unit 701 of the parallel configuration of memory units is reached. A further antecedent data item is stored in the last memory unit 70n at an address decreased by one.

Alternatively, the individual access addresses can be calculated from information on a sequence position of at least one data item of the subsequence. The sequence position of any data item specifies its position within the sequence of consecutive data items.

In order to determine a storage position of a data item from its sequence position, for instance, the storage position is incremented in accordance with the cyclic storage scheme from an initial storage position of a first data item of the sequence until reaching the specified sequence position. It is also possible to calculate the memory position by a division operation, wherein the sequence position is divided by the number of memory units in order to determine the memory address, and the remainder of the division indicates the index of the memory unit. Of course, an initial position of the first data item of the sequence has to be taken into account.

Accordingly, the storage position of a data item of the subsequence of data items can be determined from its sequence number. The storage positions including the memory addresses of the further data items of the subsequence can then be determined in the same manner as described above.

By providing a memory interface capable of individually accessing each memory unit of a parallel configuration of plural uniform memory units, subsequences of data items out of a sequence of consecutive data items can be randomly accessed at intervals of a single data item. Therefore, the transmission of data items not required for signal processing, being a typical drawback of conventional parallel memory access schemes, can be entirely avoided. In consequence, the memory interface of the present invention allows to utilize the available memory bandwidth at maximum efficiency.

In addition, a randomly selected subsequence of data items having a length corresponding to the width of the parallel configuration of memory units can be accessed within each single memory access cycle. Since only a single memory access cycle is utilized to transmit a subsequence of data items in parallel, it is not necessary to address the memory in page mode.

In particular, the page break problem, which is encountered in conventional memory access schemes for adjacent data, will not occur when accessing subsequences of consecutive data items in accordance with the present invention. Consequently, the memory interface of the present invention does not require a storage of redundant data as employed in a conventional page mode access scheme.

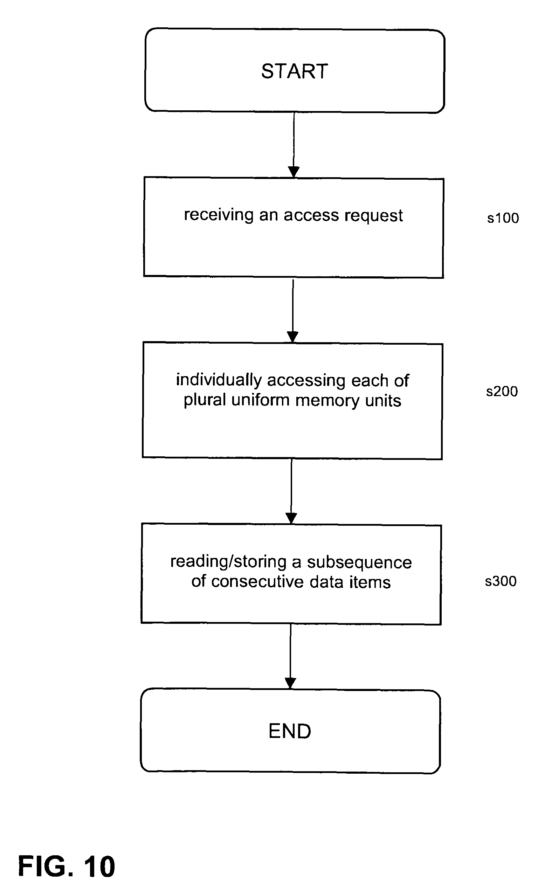

Fig. 10 illustrates a memory access method in accordance with the present invention performed by a memory interface controller such as controller 810. In a first step s100, an access request is received. Based on this access request, in the next step s200, each of plural uniform memory units is individually accessed. This access allows to read or store a subsequence of consecutive data items of the plural uniform memory units in a single memory access cycle in step s300.

Further details, application examples, and options regarding the system configuration of digital signal processing system 800 are now described by referring again to Fig. 8.

Digital signal processing system 800 can be employed for a plurality of signal processing applications that access a specific number of adjacent data items in parallel. Advantageously, the bus width of data bus 850 is configured such that the number of data items that are required in each processing step can be transmitted on the data bus simultaneously. In addition, the number of memory units corresponds to the number of data items to be accessed in parallel. Such a configuration provides a very efficient memory access, such that a high processing speed is achieved.

Typical examples for digital signal processors 820 that perform parallel processing on a specific number of adjacent data items are digital filters such as finite-extent impulse response filters (FIR filters). Such filters are usually supplied with a predetermined number of input data items in parallel at respective filter tabs. The filter stage outputs processed data reflecting all input data items.

Processing means 820 may further be implemented as a set of successive pipelined processing stages. Due to the high memory access bandwidth via the memory interface of the present invention, processing delay due to memory access is very small in each of the processing stages.

In addition, the number of memory access cycles required for accessing a predetermined number of data items can be reliably determined, since each arbitrarily selected subsequence of adjacent data items can be accessed in parallel with maximum efficiency. In particular, there is no difference in the number of access cycles depending on whether the data items of a subsequence of data items are stored in the memory units at an identical address or at different individual addresses. In particular in the latter case, a conventional approach as depicted in Fig. 6 requires two memory access cycles for reading a single subsequence of data items, so that the access time cannot be reliably predicted.

A particular application, where the memory interface of the present invention is advantageously employed is an image processing means for performing image and video processing, such as the video encoding and decoding and the picture improvement techniques described in the introduction. Specifically, in each application wherein reference to stored image information is made during the signal processing - for instance video encoding and decoding, frame-rate conversion, frame-rate up-conversion, motion compensated up-conversion or motion compensated de-interlacing - the high bandwidth random access to subsequences of adjacent data items in the stored image data improves the performance of the image processing system.

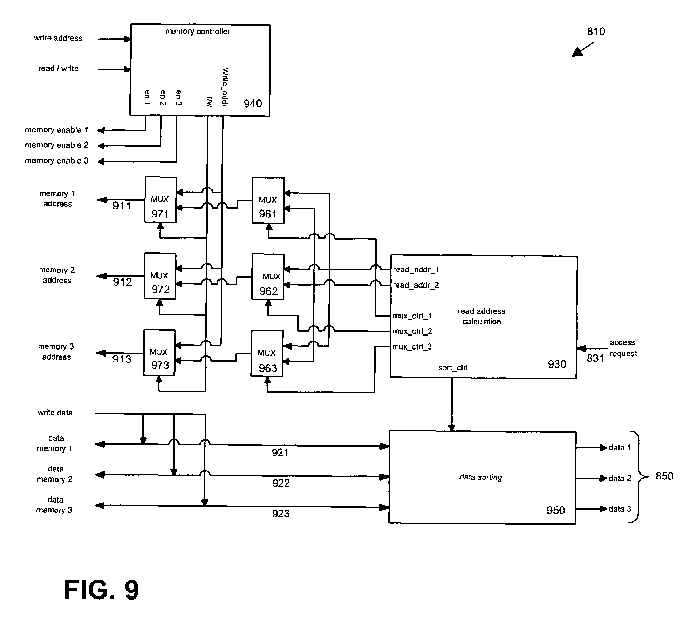

Referring to Fig. 9, controller 810 forming the memory interface of the present invention is now described in more detail.

In accordance with an exemplary configuration of a memory interface of the present invention, controller 810 is provided with an address calculation means 930 which receives an access request 831 and generates various control signals for controlling the individual access to each of the memory units in accordance with access request 831. Received access request 831 specifies a memory position of at least one of the data items of the requested subsequence to be accessed. Alternatively, the access request may identify the sequence position of a data item of the subsequence of data items. From that information, address calculation means 930 determines two adjacent memory addresses at which all the data items of a subsequence can be accessed.

Referring to the example of subsequence D6 to D10 depicted in Fig. 7, a first address (read_addr_1 in Fig. 9) which relates to the address of a memory position of a first data item D6 of subsequence D6 to D10 is determined, and a second address read_addr_2 is obtained by incrementing the first address by one. In order to provide an individual access address 911, 912, 913 to each of the plural memory units, either of these two addresses is selected by address selection means 961, 962 and 963 in accordance with corresponding address selection signals from address calculation means 930. The address selection signals (mux_ctrl_1, mux_ctrl_2, mux_ctrl_3) are determined in accordance with the storage position of each of the data items D6 to D10 of the subsequence. Address selection means 961, 962 and 963 are implemented as multiplexers in order to select one of the two calculated addresses in accordance with the selection signals.

A further stage of read/write selection means 971, 972 and 973 controls whether a read address or a write address signal is provided to the plural memory units. These selection means are implemented as multiplexes as well. They are controlled in accordance with a read/write signal r/w by a memory control means 940. This memory control means is supplied in order to control the switching between read and write access and to separately provide write addresses. In addition, the access cycles of the memory units are controlled by memory control means 940 utilizing corresponding memory enable signals en1, en2, en3.

In the exemplary configuration illustrated in Fig. 9, only the read access is performed as individual access to each of the plural uniform memory units. The write access is carried out as a collective access to identical addresses of the plural uniform memory units under control of memory controller 940. This exemplary configuration has been optimized for applications wherein mainly read accesses are carried out for randomly selected subsequences. Data which is written to the memory can be written collectively to an identical memory address. According to the configuration illustrated in Fig. 9, a write access request has a considerably simpler structure which only needs to specify the write address. Only for a read access request, the memory position or sequence position of a data item of a subsequence needs to be specified.

However, from the above description it is clear, that the write access can be carried out in the same manner as the read access such that it is possible to store a subsequence of data to the parallel configuration of memory units at random adjacent memory positions. In this case, address calculation means 930 receives access requests for read and write access and accordingly calculates two adjacent memory addresses for each read or write access. In the same manner as described above, the address selection means 961, 962 and 963 are controlled for both read or write accesses. Further, it is not necessary to provide read/write selection means 971, 972 and 973, since the addresses for each read or write access are provided from a single source in this case, namely address calculation means 930.

It should further be noted, that the memory interface of the present invention is not limited to accessing a specific number of memory units such as 3 or 5 as illustrated in the exemplary configurations. As already mentioned above, the memory interface preferably is configured such that the number of memory units in the parallel configuration of memory units corresponds to the number of data items to be accessed in parallel by a processing means.

For instance, a parallel configuration of five uniform memory units may be connected to a data bus via the memory interface of the present invention. When each memory unit has a width of 10 bit, five data items of 10 bit can be accessed in a single access cycle. Accordingly, the data bus has a width of 50 bit.

In an alternative configuration, 18 memory units, each having a width of 8 bit, are utilized to access subsequences of 18 data items of 8 bit via a data bus being 144 bit wide.

Memory interface 810 further is equipped with a data sorting means 950 which brings the data items read from the plural memory units into the same succession as the data items of the sequence of data items. In particular, when data items of a subsequence are read from different memory addresses, such as subsequence D6 to D10, the succession of the data items which is provided at the memory data ports, differs from the sequence succession.

The data sorting means 950 receives the data items from the memory units on data lines 921, 922, 923 and outputs the sorted data to data bus 850. The data items are sorted in incremental order, such that the first data item of a subsequence is output at the lowest significant bits of data bus 850 and the last data item of the subsequence occupies the highest significant bits of data bus 850. Of course, also a reverse order can be implemented, depending on the requirements of the signal processing application.

The data sorting scheme, determining how the data items on data lines 921, 922 and 923 are exchanged before outputting the subsequence of data items on data bus 850, is controlled by address calculation means 930. For instance, address calculation means 930 specifies which of the memory units outputs the first data item of a subsequence and outputs a respective control signal sort_ctrl to sorting means 950. This data item is then moved to the LSB position of data bus 850 and the consecutive data items are arranged at the higher significant bits accordingly.

In the above example, only the read data items undergo the data sorting procedure. The data to be written is directly provided from a different source and stored in the memory units without sorting. However, when also the write access is carried out by individually accessing the different memory units, it is preferred that also the data items to be written undergo a sorting procedure.

In that case, a first data item of a subsequence, being transmitted at a lowest significant bit on data bus 850 is exchanged by sorting means 950 to be transmitted via a respective data line that is connected to the memory unit, where the first data item is to be stored. The remaining data items are transmitted on respective further data signal lines to occupy consecutive memory positions, in accordance with the cyclic storage scheme. In this configuration, wherein write access is made to individual memory addresses, and data to be written is sorted accordingly, subsequences of a stored sequence of data items can be updated. Specifically, random subsequences can be access for update.

For instance, data item D6 is identified as first data item of a subsequence, and its storage position is transmitted in an access request. Accordingly, the memory address of data item D6, address 1, and the successive address, address 2 are determined as first and second address (read_addr_1 and read_addr_2) by address calculation means 930. In accordance with the information that D6 is stored in the second memory unit 702, the first address (read_addr_1) is selected for memory unit 702 and the successive memory units 703 to 705. For the following data item D10, the second address (read_addr_2) is selected and a wrap around to the first memory units 701 occurs.

When outputting these data items, the data sorting means 950 places the first data item D6 of the subsequence at the lowest significant bits of the data bus 850 and arranges the consecutive data items accordingly such that finally a subsequence D6 to D10 is output via data bus 850.

A cyclic storage scheme for the data items, as illustrated in Fig. 7, allows very efficient implementation of a memory interface. The described generation of individual access addresses by determining two adjacent addresses and selecting an appropriate one of the two adjacent addresses is easily implemented in an uncomplicated control logic.

Summarizing, a memory interface connecting a single data bus to a parallel configuration of plural uniform memory units is provided. The memory interface is capable of reading/storing a subsequence of data items from a sequence of consecutive data items within a single memory access cycle, wherein the width of a subsequence corresponds to the width of the data bus. Each data item of a subsequence is read from/stored in a different one of the plural uniform memory units, and the memory interface controls individual access to each of the plural uniform memory units in accordance with an access request for a particular subsequence of data items.

In accordance with an access request, each of the plural uniform memory units is individually accessed, such that only data items of the requested subsequence are read/stored.

It is a particular advantage of the present invention, that any subsequence within the sequence of stored data items can be randomly accessed in a single memory access cycle. In consequence, the memory access bandwidth of the memory configuration is utilized with maximum efficiency. Further, storing of redundant data is obsolete since data items stored on different memory units at different addresses can be individually accessed within the same access cycle.

## Claims

1. A memory interface connecting a single data bus (850) to a parallel configuration (700) of plural uniform memory units (701, 702, 70n) for reading/storing a subsequence of data items from a sequence of consecutive data items, said subsequence of data items being read/stored in a single memory access cycle and the width of a subsequence corresponds to the width of said data bus (850),
wherein each data item of a subsequence being read from / stored in a different one of said plural uniform memory units (701, 702, 70n), and
said memory interface controlling individual access to each of said plural uniform memory units (701, 702, 70n) in accordance with an access request (831) for a particular subsequence of data items.

2. A memory interface in accordance with claim 1, comprising a controller (810) for receiving an access request (831) for a subsequence of data items and calculating individual addresses (911, 912, 913) for said plural uniform memory units (701, 702, 70n) in accordance with said access request (831).

3. A memory interface in accordance with claim 1 or 2, wherein an access request (831) for a subsequence of data items specifies a storage position of at least one data item of said subsequence of data items (D6, D7, D8, D9, D10).

4. A memory interface in accordance with claim 3, wherein said storage position being specified by an address and a designation of a specific memory unit out of said plural uniform memory units (701, 702, 70n).

5. A memory interface in accordance with claim 1 or 2, wherein an access request (831) for a subsequence of data items (D6, D7, D8, D9, D10) specifies a position of at least one data item (D6) of said subsequence of data items (D6, D7, D8, D9, D10) within said sequence of data items.

6. A memory interface in accordance with any of claims 1 to 5, wherein said data items of said sequence of said data items being stored in a cyclic manner in said parallel configuration (700) of plural uniform memory units (701, 702, 70n), storing each of consecutive data items in consecutive memory units utilizing the same address, and increasing said address after occupying storage positions accessible under said address in all said plural uniform memory units (701, 702, 70n).

7. A memory interface in accordance with any of claims 2 to 6, wherein said individual addresses (911, 912, 913) only include either a single address or two adjacent addresses.

8. A memory interface in accordance with claim 7, wherein said controller (810) includes an address calculation stage (930) for calculating two adjacent addresses in accordance with said access request (831).

9. A memory interface in accordance with claim 8, wherein said controller (810) further includes selection means (961, 962, 963) for selecting one of said two calculated addresses as individual address for each of said plural uniform memory units (701, 702, 70n).

10. A memory interface in accordance with any of claims 1 to 9, wherein said memory interface further comprising a sorting means (950) for sorting the data items of a subsequence of data items read from said plural uniform memory units (701, 702, 70n) in order to bring the succession of said read data items into accordance with the succession of data items in said sequence.

11. A memory interface in accordance with any of claims 1 to 10, wherein said memory interface further comprising a sorting means for sorting the data items of a subsequence of data items to be stored in said plural uniform memory units (701, 702, 70n) in order to bring the succession of said data items to be stored into accordance with a predetermined storage succession.

12. A memory interface in accordance with claim 10 or 11, wherein said sorting means (950) determines an exchange scheme for said data items in accordance with a control signal from said address calculation stage (930) indicative of a storage position of at least one data item of the subsequence of data items.

13. A memory interface in accordance with any of claims 1 to 12, further comprising a write controller (940) for storing respective data items at an identical address in each of said plural uniform memory units.

14. A memory interface in accordance with any of claims 1 to 13, wherein each of said data items and each of said plural uniform memory units (701, 702, 70n) have a width of 10 bit.

15. A memory interface in accordance with any of claims 1 to 14 wherein a subsequence includes 5 data items.

16. A memory interface in accordance with any of claims 1 to 15, wherein said data bus (850) has a width of 50 bit.

17. A data processing system for performing data processing requiring access to a predetermined number of adjacent data items of a sequence of consecutive data items, comprising processing means (820) for performing data processing on said adjacent data items, a single data bus (850) connected to said processing means (820), and a memory interface (810) in accordance with any of claims 1 to 16 for connecting said data bus (850) to a plurality of uniform memory units (701, 702, 70n).

18. A data processing system in accordance with claim 17, wherein said processing means (820) processes said predetermined number of adjacent data items in parallel, and the number of data items of a subsequence of data items accessed via said memory interface (810) in a single memory access cycle corresponds to the predetermined number of data items being processed in parallel.

19. A data processing system in accordance with claim 18, wherein said processing means (820) include a digital filter being supplied with said predetermined number of adjacent data items.

20. A data processing system in accordance with any of claims 17 to 19, wherein said processing means (820) includes a number of pipelined processing stages.

21. A data processing system in accordance with any of claims 17 to 20, wherein said processing means (820) include an image processor.

22. A data processing system in accordance with claim 21, wherein said image processor being operable to perform at least one of the following picture improvement algorithms of frame-rate conversion, frame-rate up-conversion, and motion compensated up-conversion.

23. A memory access method for accessing a parallel configuration of plural uniform memory units via a single data bus in order to read/store a subsequence of data items from a sequence of consecutive data items, the width of a subsequence corresponding to the width of said data bus, comprising the step of:
reading/storing (s100, s200, s300) a particular subsequence of data items in a single memory access cycle, wherein each data item of said subsequence being read from / stored in a different one of said plural uniform memory units, and
wherein said reading/storing step (s100, s200, s300) comprising the step of controlling (s200) individual access to each of said plural uniform memory units in accordance with an access request for said subsequence of data items.

24. A memory access method in accordance with claim 23, wherein said reading/storing step (s100, s200, s300) comprising the step of receiving an access request (s100) for a subsequence of data items and calculating individual addresses for said plural uniform memory units in accordance with said access request.

25. A memory access method in accordance with claim 23 or 24, wherein an access request for a subsequence of data items specifies a storage position of at least one data item of said subsequence of data items.

26. A memory access method in accordance with claim 25, wherein said storage position being specified by an address and a designation of a specific memory unit out of said plural uniform memory units.

27. A memory access method in accordance with claim 23 or 24, wherein an access request for a subsequence of data items specifies a position of at least one data item of said subsequence of data items within said sequence of data items.

28. A memory access method in accordance with any of claims 23 to 27, wherein said data items of said sequence of said data items being stored in a cyclic manner in said parallel configuration of plural uniform memory units, storing each of consecutive data items in consecutive memory units utilizing the same address, and increasing said address after occupying storage positions accessible under said address in all said plural uniform memory units.

29. A memory access method in accordance with any of claims 24 to 28, wherein said individual addresses only include either a single address or two adjacent addresses.

30. A memory access method in accordance with claim 29, wherein said reading/storing step (s100, s200, s300) further comprising the step of calculating two adjacent addresses in accordance with said access request.

31. A memory access method in accordance with claim 30, wherein said reading/storing step (s100, s200, s300) further comprising the step of selecting one of said two calculated addresses as individual address for each of said plural uniform memory units.

32. A memory access method in accordance with any of claims 23 to 31, wherein said reading/storing step (s100, s200, s300) further comprising the step of sorting the data items of a subsequence of data items read from said plural uniform memory units in order to bring the succession of said read data items into accordance with the succession of data items in said sequence.

33. A memory access method in accordance with any of claims 23 to 32, wherein said reading/storing step (s100, s200, s300) further comprising the step of sorting the data items of a subsequence of data items to be stored in said plural uniform memory units in order to bring the succession of said data items to be stored into accordance with a predetermined storage succession.

34. A memory access method in accordance with claim 32 or 33, wherein said sorting step including the step of determining an exchange scheme for said data items in accordance with a storage position of at least one data item of the subsequence of data items.

35. A memory access method in accordance with any of claims 23 to 34, wherein a write access is carried out as a collective access to identical addresses of said plural uniform memory units.

36. A memory access method in accordance with any of claims 23 to 35, wherein each of said data items and each of said plural uniform memory units have a width of 10 bit.

37. A memory access method in accordance with any of claims 23 to 36, wherein a subsequence includes 5 data items.

38. A memory access method in accordance with any of claims 23 to 37, wherein said data bus has a width of 50 bit.

## Amended claims

### Amended claims in accordance with Rule 86(2) EPC.

**1.** A memory interface connecting a single data bus (850) to a parallel configuration (700) of plural uniform memory units (701, 702, 70n) for reading/storing a subsequence of adjacent data items from a sequence of consecutive data items, said subsequence of data items being read/stored in a single memory access cycle and the width of said subsequence corresponds to the width of said data bus (850), wherein each data item of said subsequence being read from / stored in a different one of said plural uniform memory units (701, 702, 70n), comprising
a controller (810) for receiving an access request (831) for said subsequence of data items and providing individual addresses (911, 912, 913) to said plural uniform memory units (701, 702, 70n) in accordance with said access request (831), said controller (810) including means for calculating two adjacent addresses in accordance with said access request (831),
**characterized by**
a plurality of multiplexers (961, 962, 963), each connected to a different memory unit of said plural uniform memory units (701, 702, 70n) for selecting one of said two calculated addresses as individual address, and
an address calculation stage (930) for calculating said two adjacent addresses and generating individual selection control signals (mux_ctrl_1, mux_ctrl_2, mux_ctrl_3) for said multiplexers (961, 962, 963).

**2.** A memory interface in accordance with claim 1, wherein said access request (831) for said subsequence of data items specifies a storage position of at least one data item of said subsequence of data items (D6, D7, D8, D9, D10).

**3.** A memory interface in accordance with claim 2, wherein said storage position being specified by an address and a designation of a specific memory unit out of said plural uniform memory units (701, 702, 70n).

**4.** A memory interface in accordance with claim 1, wherein said access request (831) for said subsequence of data items (D6, D7, D8, D9, D10) specifies a position of at least one data item (D6) of said subsequence of data items (D6, D7, D8, D9, D10) within said sequence of data items.

**5.** A memory interface in accordance with any of claims 1 to 4, wherein said data items of said sequence of said data items being stored in a cyclic manner in said parallel configuration (700) of plural uniform memory units (701, 702, 70n), storing each of consecutive data items in consecutive memory units utilizing the same address, and increasing said address after occupying storage positions accessible under said address in all said plural uniform memory units (701, 702, 70n).

**6.** A memory interface in accordance with any of claims 1 to 5, wherein said memory interface further comprising a sorting means (950) for sorting the data items of said subsequence of data items read from said plural uniform memory units (701, 702, 70n) in order to bring the succession of said read data items on said data bus (850) into accordance with the succession of data items in said subsequence.

**7.** A memory interface in accordance with any of claims 1 to 6, wherein said memory interface further comprising a sorting means for sorting the data items of said subsequence of data items to be stored in said plural uniform memory units (701, 702, 70n) in order to bring the succession of said data items to be stored into accordance with a predetermined storage succession.

**8.** A memory interface in accordance with claim 6 or 7, wherein said sorting means (950) determines a sorting scheme for said data items in accordance with a control signal from said address calculation stage (930) indicating a storage position of at least one data item of the subsequence of data items.

**9.** A memory interface in accordance with any of claims 1 to 8, further comprising a write controller (940) for storing respective data items at an identical address in each of said plural uniform memory units.

**10.** A memory interface in accordance with any of claims 1 to 9, wherein each of said data items and each of said plural uniform memory units (701, 702, 70n) have a width of 10 bit.

**11.** A memory interface in accordance with any of claims 1 to 10 wherein said subsequence includes 5 data items.

**12.** A memory interface in accordance with any of claims 1 to 15, wherein said data bus (850) has a width of 50 bit.

**13.** A data processing system for performing data processing requiring access to a predetermined number of adjacent data items of a sequence of consecutive data items, comprising processing means (820) for performing data processing on said adjacent data items, a single data bus (850) connected to said processing means (820), and a memory interface (810) in accordance with any of claims 1 to 12 for connecting said data bus (850) to a plurality of uniform memory units (701, 702, 70n).

**14.** A data processing system in accordance with claim 13, wherein said processing means (820) processes said predetermined number of adjacent data items in parallel, and the number of data items of said subsequence of data items accessed via said memory interface (810) in a single memory access cycle corresponds to the predetermined number of data items being processed in parallel.

**15.** A data processing system in accordance with claim 14, wherein said processing means (820) include a digital filter being supplied with said predetermined number of adjacent data items.

**16.** A data processing system in accordance with any of claims 13 to 15, wherein said processing means (820) includes a number of pipelined processing stages.

**17.** A data processing system in accordance with any of claims 13 to 16, wherein said processing means (820) include an image processor.

**18.** A data processing system in accordance with claim 17, wherein said image processor being operable to perform at least one of the following picture improvement algorithms of frame-rate conversion, frame-rate up-conversion, and motion compensated up-conversion.

**19.** A memory access method for accessing a parallel configuration of plural uniform memory units via a single data bus in order to read/store a subsequence of adjacent data items from a sequence of consecutive data items, the width of said subsequence corresponding to the width of said data bus, comprising the step of:
reading/storing (s100, s200, s300) said subsequence of data items in a single memory access cycle, wherein each data item of said subsequence being read from / stored in a different one of said plural uniform memory units, and
wherein said reading/storing step (s100, s200, s300) comprising the steps of:
receiving an access request (s100) for said subsequence of data items and providing individual addresses to said plural uniform memory units in accordance with said access request, and
calculating two adjacent addresses in accordance with said access request.
**characterized by**
generating individual selection control signals (mux_ctrl_1, mux_ctrl_2, mux_ctrl_3) for a plurality of multiplexers, each connected to a different memory unit of said plural uniform memory units for selecting one of said two calculated addresses as individual address.

**20.** A memory access method in accordance with claim 19, wherein said access request for said subsequence of data items specifies a storage position of at least one data item of said subsequence of data items.

**21.** A memory access method in accordance with claim 20, wherein said storage position being specified by an address and a designation of a specific memory unit out of said plural uniform memory units.

**22.** A memory access method in accordance with claim 19, wherein said access request for said subsequence of data items specifies a position of at least one data item of said subsequence of data items within said sequence of data items.

**23.** A memory access method in accordance with any of claims 19 to 22, wherein said data items of said sequence of said data items being stored in a cyclic manner in said parallel configuration of plural uniform memory units, storing each of consecutive data items in consecutive memory units utilizing the same address, and increasing said address after occupying storage positions accessible under said address in all said plural uniform memory units.

**24.** A memory access method in accordance with any of claims 19 to 23, wherein said reading/storing step (s100, s200, s300) further comprising the step of sorting the data items of said subsequence of data items read from said plural uniform memory units in order to bring the succession of said read data items on said data bus into accordance with the succession of data items in said subsequence.

**25.** A memory access method in accordance with any of claims 19 to 24, wherein said reading/storing step (s100, s200, s300) further comprising the step of sorting the data items of said subsequence of data items to be stored in said plural uniform memory units in order to bring the succession of said data items to be stored into accordance with a predetermined storage succession.

**26.** A memory access method in accordance with claim 24 or 25, wherein said sorting step including the step of determining a sorting scheme for said data items in accordance with a storage position of at least one data item of the subsequence of data items.

**27.** A memory access method in accordance with any of claims 19 to 26, wherein a write access is carried out as a collective access to identical addresses of said plural uniform memory units.

**28.** A memory access method in accordance with any of claims 19 to 27, wherein each of said data items and each of said plural uniform memory units have a width of 10 bit.

**29.** A memory access method in accordance with any of claims 19 to 28, wherein said subsequence includes 5 data items.

**30.** A memory access method in accordance with any of claims 19 to 29, wherein said data bus has a width of 50 bit.
